# EUROPEAN PATENT APPLICATION

(11) **EP 0 566 543 A1**
(43) Date of publication of application: **20.10.1993**
(21) Application number: 93830136.3
(22) Date of filing: 01.04.1993
(51) Int. Cl.: F16K 1/12

(54) **Pneumatic control front valve**

(30) Priority: 14.04.1992 IT BS920041
(71) Applicant: OMAL DI BONOMI A. & C. S.a.s., I-25069 Villa Carcina (Brescia) (IT)
(72) Inventor: Bonomi, Agostino, I-25065 Lumezzane (Brescia) (IT)
(74) Representative: Manzoni, Alessandro

(57) **Abstract**

A cut-off valve for fluids comprising a stopper (13) fixed in the valve body contiguously to one of the passages (11,12) for the inflow and outflow of fluid, a valve seat (16c) displaceable between said two passages and designed to move close to or away from said stopper (13), thus providing the closing and opening of the valve. The valve includes a pneumatic actuator (16a, 18) which provides the movement of the valve seat (16c) to open and/or closed position, the said valve seat being defined by a portion of the said pneumatic actuator.

## Description

The present invention relates to a front cut-off valve integrated with a pneumatic actuator for controlling the opening and closing of the valve.

At present, cut-off valves are known which comprise a body member including a passage for the inflow and a passage for the outflow offluid and a valve seat located intermediately between said passages, and a stopper which interacts with the valve seat for cutting-off the flow.

Another known cut-off valve of this type is integrated with a pneumatic actuator designed to control the opening and closing of the valve and including a piston integrally formed with a stem, which is axially actuated and movable inside the valve body.

In these known cut-off valves, the stopper is usually movable and displaceable towards the valve seat inside the body member. When a cut-off valve is integrated with a pneumatic control device, the stopper is fixed to and movable with the piston of said control device. An example of a valve integrated with a pneumatic piston is described in FR-A-1 312 087.

However, the stopper integrally formed with the piston remains on the line of the flow, thus being constantly flooded therewith. Such an arrangement affects control of the piston: this means that the piston - and consequently also the valve body - must be made bigger than necessary so as to overcome the fluid thrust exerted on the stopper when said stopper is operated in the direction opposite to the direction of said thrust. Moreover, in known valves, the body comprises a multiplicity of components, which results in a certain constructive complexity, with difficulty in execution and assembly.

It is an object of the present invention to provide a new configuration, embodiment and combination of the valve components and the pneumatic actuator integrated, in order to obviate the abovementioned disadvantageous characteristics.

Another object of the invention is to provide a pneumatic control valve comprising a body member including only two components, which define at the same time a passage for the fluid, a guide forthe stem and a chamber for the control piston.

A pneumatic control cut-off valve of the type indicated above is as claimed in Claim 1.

In practice, the stopper is fixed in the body and the valve seat includes one end of the piston stem. The piston stem may therefore be provided with an axial through hole coinciding with the passages for the inflow and outflow of water and free from any obstruction. The stem is not subject to any axial thrusts exerted by the fluid, therefore the piston is not affected by the fluid delivered, but only by the actuating pneumatic fluid and/or by a spring, if provided.

This arrangement offers the following advantages:
- the valve body comprises only two elements complementary to each other;
- the pressure exerted by the fluid delivered does not affect the piston and the position thereof;
- since the pressure of the fluid delivered does not affect the piston, said piston may be reduced in diameter and still exert the force necessary for controlling the opening and closing of the valve;
- consequently, the valve overall dimensions may be reduced accordingly;
- the valve may be used in the same way, whatever the pressure of the fluid to be delivered;
- the piston, free from any stress, remains securely stationary until the pneumatic actuating fluid actuates the control piston;
- thevalve may be used indifferently with theflu- id flowing through it in one direction or in the opposite direction;
- that is to say that the valve may be used in inverted position, too, with the stopper on the outlet side or with the stopper on the inlet side.

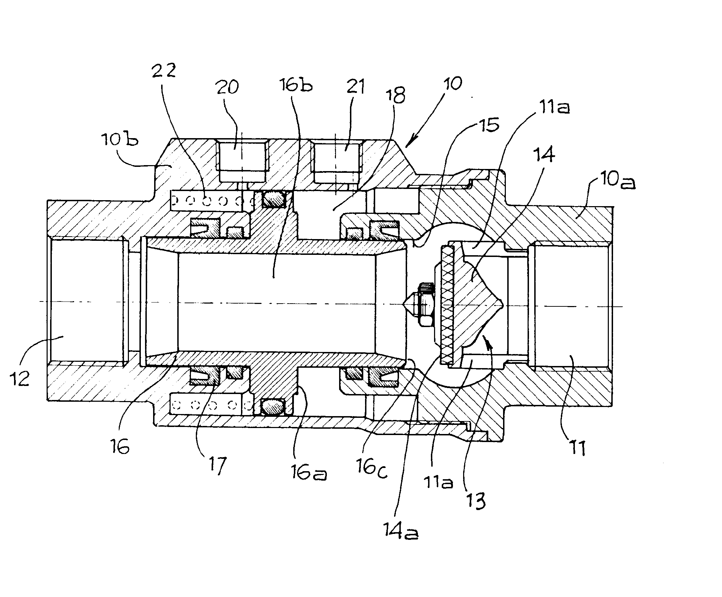

An example of a practical embodiment of the invention is indicated herein after, with reference to the accompanying drawing showing a longitudinal section view of the valve, with a pneumatic actuator fitted.

This valve comprises a body member 10 including a passage 11 for the inflow of the fluid to be delivered, a passage 12 for the outflow of fluid and - intermediately between said passages - a stationary stopper 13. The stopper 13 is located in line with one of said passages 11,12, eg. with inlet passage 11, but spaced from said passage in order to form apertures 11a for the intermediate transit of fluid from one passage to the other. More particularly, the stopper 13 includes a plate 14 fixed in a body member 10 and a front gasket 14a facing the opposite passage, i.e. outlet passage 12.

However, inlet and outlet passages 11,12 may be arranged in inverse position with respect to the aforementioned description and to the stopper, without thereby affecting the substance of this invention.

The body member 10 comprises two coaxial elements 10a and 10b, screwed and flanged to each other, which - in intermediate position - define a housing 15 which slidingly receives a stem 16 with a piston 16a sliding axially therein. The stem 16 is driven in a watertight manner by means of gaskets 17 located in the body member 10, in line with inlet and outlet passages 11,12 and in an intermediate position between said passages. It comprises an axial through conduit 16b having the same section as passages 11,12 and its shape is free from any surfaces exposed to the axial thrust exerted by the fluid to be delivered. The stem end 16 facing the stopper 13 constitutes a valve seat 16c which is designed to rest against the front gasket 14a of the fixed stopper 13.

Both elements included in the body 10, when assembled, define a chamber 18 around the stem 16, which receives the piston 16a integrally formed with or fixed to stem 16. The assembly chamber/piston substantially forms an actuating cylinder, the controlled opening/closing of the valve being provided by the displacement of the piston 16a with stem 16 in one direction or in the other.

In fact, when the stem 16 with valve seat 16c is away from the stopper, the fluid may flow in through the inlet passage towards the outlet passage for delivery; on the other hand, when the stem 16 is close to the stopper 13, the flow of fluid is stopped and the valve closed.

To permit piston 16a with stem 16 to be displaced, pressurized fluid such as air, is supplied to the chamber 18. Said air may be supplied to/discharged into chamber 18 from both sides of the piston 16a, through air inlet/outlet holes 20,21 as illustrated in the drawing.

The piston will therefore be double acting and will permit to positively control both the closing and opening of the valve.

Alternatively, air may be supplied to the chamber from only one side of the piston, thus providing controlled displacement thereof in only one direction, the motion in the opposite direction being provided by a return spring 22 drawn in section line.

In that case, the piston will be single acting and the system will permit to keep the valve normally closed or normally open by means of said spring, with the assembly standing, and to control respectively the closing and opening thereof by means of the piston. All this within the scopes and advantages indicated above.

## Claims

1. A cut-off valve assembly for fluids comprising a body member (10) which includes an inlet passage (11) and an outlet passage (12), and a pneumatic actuator (16,17,18) for closing and/or opening the valve which includes a piston integrally formed with a stem and axially displaceable inside the valve body, said stem being designed to interact with a stopper (13) for controlling the flow of fluid, characterized in that said body member (10) comprises two elements (10a and 10b) screwed or flanged to each other and centrally defining a housing (15) designed to slidingly receive said stem (16), which interacts with the stopper (13) and is axially driven therein, and a chamber (18) located around said housing, which slidingly receives said piston (16a) integrally formed with the stem, and in that said stopper (13) is fixed in said body contiguously to one of the passages (11,12) for the inflow and outflow of fluid.

2. A cut-off valve assembly for fluids as claimed in claim 1, wherein said stem 16, at one end, defines a valve seat (16c) which is displaceable between said two passages and designed to move close to or away from said stopper (13), the said movement being caused by axial displacement of the stem within the said body, and wherein the pneumatic actuator (16a, 18) is single or double acting as a result of the displacement of the valve seat (16c) to open or closed positions.

3. A cut-off valve assembly as claimed in claim 1, wherein the stem (16) of the pneumatic actuator defines an axial through conduit (16b) designed to connect inlet passage (11) to outlet passage (12), and wherein pressurized fluid, such as air, is supplied to the chamber (18) which contains and slidingly receives the piston (16a) fixed to or integrally formed with the stem (16), so as to permit the piston with the stem to be displaced towards and away from the stopper.

4. A cut-off valve assembly as claimed in claim 3, wherein pressurized fluid is supplied to said chamber (18) from both sides of the piston (16a), through holes provided for the inflow/outflow of said fluid.

5. A cut-off valve assembly as claimed in claim 3, wherein pressurized fluid is supplied to said chamber (18) from one side of the piston (16a), the said piston being stressed by a return spring on the opposite side.
